# EUROPEAN PATENT SPECIFICATION

(11) **EP 2 439 392 B1**
(45) Date of publication and mention of the grant of the patent: **22.04.2015**
(21) Application number: 11184230.8
(22) Date of filing: 06.10.2011
(51) Int. Cl.: F02D 41/00, F02D 41/14

(54) **Zone control method of a wastegate valve in a turbocharged internal combustion engine**
Zonensteuerverfahren für ein Bypassventil in einem Verbrennungsmotor mit Turbolader
Procédé de contrôle de zone d'une soupape de décharge dans un moteur à combustion interne de turbocompresseur

(30) Priority: 11.10.2010 IT BO20100606
(43) Date of publication of application: 11.04.2012
(73) Proprietor: Magneti Marelli S.p.A., Corbetta (MI) (IT)
(72) Inventor: Panciroli, Marco, 40100 BOLOGNA (IT); Alunni, Francesco, 06132 SAN SISTO (IT)
(74) Representative: Bergadano, Mirko

(56) References cited:
- EP-A1- 2 314 847
- EP-A2- 1 614 882
- WO-A1-2004/027235
- FR-A1- 2 897 898
- US-A- 6 076 352

## Description

### TECHNICAL FIELD

The present invention relates to a control method of a wastegate valve in a turbocharged internal combustion engine.

### PRIOR ART

As known, certain internal combustion engines are equipped with a turbocharger boost system, which is capable of increasing the output developed by the engine by exploiting the enthalpy of the exhaust gases in order to compress the air aspirated by the engine and hence increase the volumetric efficiency of the suction.

A turbocharger boost system comprises a turbocharger equipped with a turbine, which is arranged along a discharge conduit to rotate at high speed under the bias of the exhaust gases expelled by the engine, and with a compressor, which is rotated by the turbine and is arranged along the air supply conduit to compress the air aspirated by the engine. In a turbocharger boost system there is a need to keep the operating range of the turbocharger within a useful zone which depends on the engine point, both due to functional reasons (i.e. to avoid irregular operations or however with low efficiency), and to structural reasons (i.e. to avoid damage to the turbocharger). In order to limit the boost pressure (i.e. the pressure of the compressed air downstream of the compressor) parallely to the turbine, a bypass conduit is arranged which is adjusted by a wastegate valve which is controlled by an actuator thereof; when the wastegate valve opens, a portion of the exhaust gases flows along the bypass conduit and then bypasses the turbine, and this results in a decrease of the rotation speed of the rotor and therefore in a boosting decrease.

In more affordable turbochargers, the actuator of the wastegate valve is pneumatic, is driven by a solenoid control valve which allows the intervention of the wastegate valve to be adjusted, and uses the existing pressure jump between the atmospheric pressure and the boost pressure for its own operation. Such a pneumatic actuator is affordable, but on the other hand it is not capable of operating, therefore of controlling the wastegate valve if the difference between the boost pressure and the atmospheric pressure does not exceed a threshold of intervention, which depends on the physical features of the actuator. In the presence of a pneumatic actuator of this type, when the boost pressure is null or low, the wastegate valve is not controllable; hence in the presence of a pneumatic actuator of this type, when the boost pressure is lower than the threshold of intervention, it is useless if not damaging to attempt to control the wastegate valve (if a feedback control is used with a regular contribution, the supplementary contribution is taken to the maximum values allowed due to the lack of action by the wastegate valve). A control method for the wastegate valve was suggested in European patent application EP 2 314 847 A1 , which avoids (because it is clearly useless) any type of control of the pneumatic actuator of the wastegate valve when the boost jump (i.e. the difference between the actual boost pressure and the atmospheric pressure) is significantly lower than the threshold of intervention.

In more sophisticated turbochargers, the actuator of the wastegate valve is pneumatic, is driven by a solenoid control valve which allows the intervention of the wastegate valve to be adjusted, and uses an external depression which is independent from the turbocharger for its operation (alternatively, the actuator of the wastegate valve is electric). Such a pneumatic (or electric) actuator is more costly but always operating (regardless of the boost pressure) and thus always allows the wastegate valve to be controlled. A control method of the wastegate valve was suggested in European patent application EP 2 314 847 A1, which divides the operation of the wastegate valve into two distinct zones: a low boost jump zone in which the boost jump is lower than a pressure threshold, and a high boost jump zone in which the boost jump is higher than the pressure threshold. A control is used in both the zones of operation, which calculates the target position of the actuator of the wastegate valve by adding an open loop contribution and a closed loop contribution (i.e. feedback), both based on the target boost pressure required by the engine control; the type of control is differentiated in the two zones, by differentiating the intervention constants of PID controllers, for example.

However, it has been noted that there is a rather apparent turbo-lag even when using the control method suggested by European patent application EP 2 314 847 A1 combined with an always-operating actuator of the wastegate valve, when a sudden and rapid request for significantly increased driving torque occurs (i.e. when the driver strongly pushes down on the accelerator pedal to perform an overtaking, for example) from a condition of modest driving torque (low rotation speed and contained speed).

Patent US6076352A discloses a control method of the wastegate valve in an internal combustion engine turbocharged by a turbocharger; the control method comprises the steps of: determining a target boost pressure; determining an actual boost pressure; and determining a target position of the wastegate valve through a control strategy that uses the target boost pressure and the target boost pressure.

### DESCRIPTION OF THE INVENTION

It is the object of the present invention to provide a control method of a wastegate valve in a turbocharged internal combustion engine, which control method is free from the above-described drawbacks, and is particularly easy and cost-effective to be implemented.

According to the present invention, a control method of a wastegate valve in a turbocharged internal combustion engine is provided as claimed in the appended claims.

### BRIEF DESCRIPTION OF THE DRAWINGS

The present invention will now be described with reference to the accompanying drawings, which show a non-limiting embodiment thereof, in which:
- figure 1 is a diagrammatic view of an internal combustion engine turbocharged by a turbocharger and equipped with a control unit which implements the control method of the wastegate valve object of the present invention;
- figure 2 is a diagrammatic view of a pneumatic actuator of the wastegate valve;
- figure 3 is a graph illustrating various zones of operation of the pneumatic actuator of the wastegate valve as a function of the target boost pressure;
- figure 4 is a graph illustrating an experimental control map;
- figure 5 is a block diagram of a control logic of the wastegate valve;
- figure 6 is a graph illustrating the weight variation of an adaptive contribution as a function of the position of the wastegate valve;
- figure 7 is a further block diagram of a control logic of the wastegate valve; and
- figure 8 is a graph illustrating a further experimental control map.

### PREFERRED EMBODIMENTS OF THE INVENTION

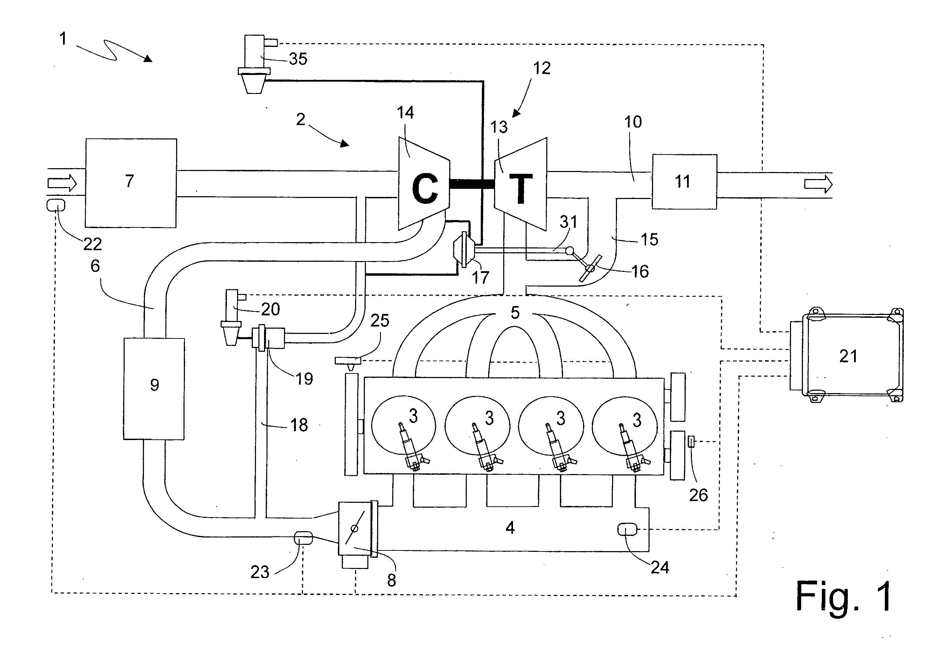

Numeral 1 in figure 1 indicates as a whole an internal combustion engine, turbocharged by a turbocharger boost system 2.

The internal combustion engine 1 comprises four cylinders 3, each of which is connected to a suction manifold 4 by means of at least one respective suction valve (not shown), and to a discharge manifold 5 by means of at least one respective discharge valve (not shown). The suction manifold 4 receives fresh air (i.e. air from the external ambient) through a suction conduit 6, which is equipped with an air filter 7 and is adjusted by a throttle valve 8. An intercooler 9 serving the function of cooling the aspirated air is arranged along the suction conduit 6. Connected to the discharge manifold 5 is a discharge conduit 10 which supplies the discharge gases generated by the combustion to a discharge system, which discharges the gases generated by the combustion into the atmosphere and normally comprises at least one catalyser 11 and at least one silencer (not shown) arranged downstream of catalyser 11.

The boost system 2 of the internal combustion engine 1 comprises a turbocharger 12 equipped with a turbine 13, which is arranged along the discharge conduit 10 to rotate at high speed under the action of the discharge gases expelled from the cylinders 3, and a compressor 14 which is arranged along the suction conduit 6 and is mechanically connected to turbine 13 to be taken into rotation by turbine 13, so as to increase the pressure of the air supplied into the supply conduit 6.

Provided along the discharge conduit 10 is a bypass conduit 15, which is parallely connected to turbine 13 so as to have its ends connected upstream and downstream of turbine 13; a wastegate valve 16 is arranged along the bypass conduit 15 and is adapted to adjust the flow of the exhaust gases flowing through the bypass conduit 15 and is controlled by a pneumatic actuator 17. A bypass conduit 18 is provided along the discharge conduit 6 and is parallely connected to compressor 14 so as to have its ends connected upstream and downstream of compressor 14; arranged along the bypass conduit 18 is a Poff valve 19, which is adapted to adjust the flow of the exhaust gases flowing through the bypass conduit 18 and is driven by an electric actuator 20.

The internal combustion engine 1 is controlled by an electronic control unit 21, which monitors the operation of all the components of the internal combustion engine 1, including the boost system 2. In particular, the electronic control unit 21 drives the actuators 17 and 20 of the wastegate valve 16 and of the Poff valve 19. The electronic control unit 21 is connected to some sensors 22 which measure the temperature and pressure along the suction conduit 6 upstream of compressor 14, to some sensors 23 which measure the temperature and pressure along the suction conduit 6 upstream of the throttle valve 8, and to some sensors 24 which measure the temperature and pressure inside the suction manifold 4. Moreover, the electronic control unit 21 is connected to a sensor 25 which measures the angular position (and thus the rotation speed) of a drive shaft of the internal combustion engine 1 and a sensor 26 which measures the phase of the suction and/or discharge valves.

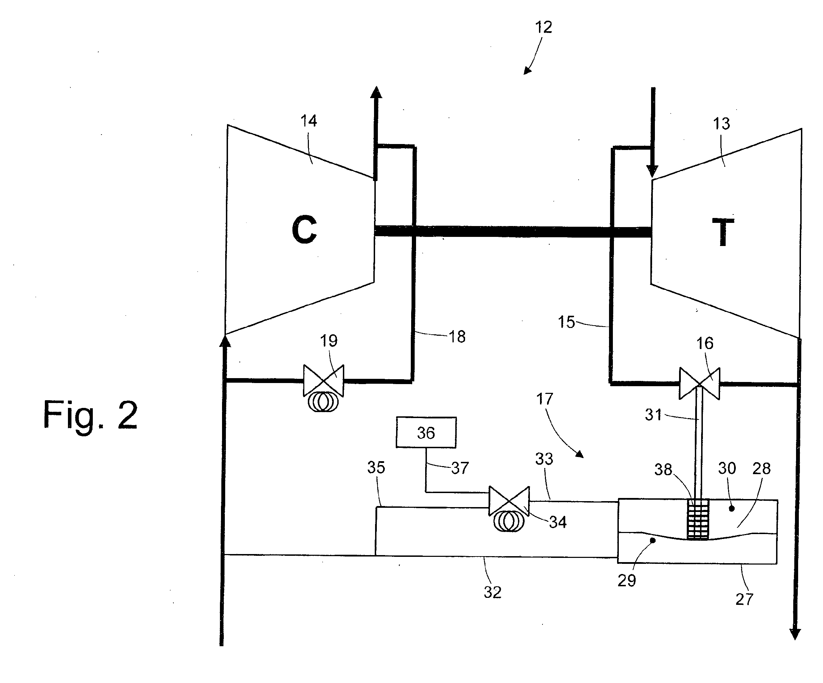

As shown in figure 2, the pneumatic actuator 17 of the wastegate valve 16 comprises a sealed shell 27 which internally supports a flexible membrane 28, which divides the sealed shell 27 into two chambers 29 and 30 which are isolated from each other. The flexible membrane 28 is mechanically connected to a rigid rod 31 which drives the wastegate valve 16 to control the opening and closing of the wastegate valve 16. Chamber 29 is connected by means of a conduit 32 to the atmospheric pressure (taken upstream of compressor 14), while chamber 30 is connected by means of a conduit 33 to a three-way solenoid control valve 34, which is adapted to connect chamber 30 to the atmospheric pressure (taken upstream of compressor 14) by means of a conduit 35 or to a vacuum source 36 (i.e. a depressor) by means of a conduit 37. The solenoid control valve 34 is of the proportional type and is capable of partializing the connection of chamber 30 to the vacuum source 36 to continuously vary the depression around chamber 30. In other words, chamber 30 of shell 27 is connectable, through the solenoid control valve 34, to the atmospheric pressure by means of conduit 35 or to source 36 by means of conduit 37; thereby, by driving the solenoid control valve 34, a varying depression (i.e. a pressure lower than the atmospheric pressure) may be imposed in chamber 30, and the control of the position of the wastegate valve 16 is always active (i.e. the wastegate valve 16 is always sensitive to the action of the solenoid control valve 34).

A contrast spring 38 is arranged in chamber 30 and is compressed between a wall of shell 27 and the flexible membrane 28, and rests on the flexible membrane 28 on the same side as rod 31. When the pressure difference between chamber 29 and chamber 30 is lower than a threshold of intervention (determined by the preload of the contrast spring 38), rod 31 keeps the wastegate valve 16 in a completely open position (i.e. the wastegate valve 16 is normally open), while when the pressure difference between chamber 29 and chamber 30 is higher than the threshold of intervention, the contrast spring 38 starts to compress under the thrust of the flexible membrane 28 which hence is deformed, thus resulting in a movement of rod 31, which therefore moves the wastegate valve 16 towards the closing position. By driving the solenoid control valve 34, chamber 30 may be connected to the vacuum source 36 with a variable through gap, therefore the pressure difference between the two chambers 29 and 30 may be regulated and, in turn, it results in the opening or closing of the wastegate valve 16.

Among other things, the electronic control unit 21 controls the position of the wastegate valve 16 by driving the solenoid control valve 34 of the pneumatic actuator 17. The control mode used by the electronic control unit 21 for controlling the position of the wastegate valve 16 by driving the solenoid control valve 34, is described below.

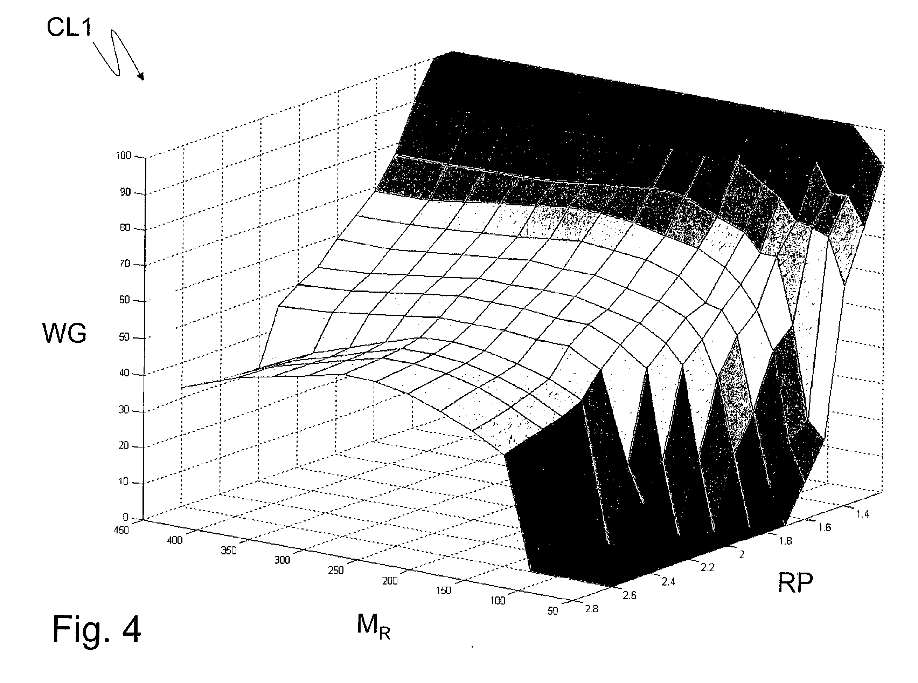

In a step of designing the internal combustion engine 1, a control law CL1 is experimentally determined, which provides a target opening WG of the solenoid control valve 34 of the wastegate valve 16 as a function of a boost pressure P (or better, of a boost ratio RP which is equal to the ratio of the boost pressure P with the atmospheric pressure Pₐₜₘ and is equivalent to the boost pressure P) and of a reduced mass capacity M_{R} of compressor 14. In other words, the control low CL1 provides the opening WG of the solenoid control valve 34 of the wastegate valve 16 which should allow a desired boost pressure P (or better, a desired boost ratio RP) to be obtained in the presence of a certain reduced mass capacity M_{R}. According to a preferred embodiment shown by way of example in figure 4, the control law CL1 consists of an experimental map (i.e. a table or better, a matrix)(which, as apparent in figure 4, is strongly non-linear); alternatively, the control law CL1 could consist of a mathematical function. The control law CL1 is saved in a memory of the electronic control unit 21 to be used as described below.

In the above-described embodiment, the control law CL1 provides a target opening WG of the solenoid control valve 34 of the wastegate valve 16 as the function of a boost pressure P (or better, of a boost ratio RP which is equal to the ratio of the boost pressure P with the atmospheric pressure Pₐₜₘ and is equivalent to the boost pressure P) and of a reduced mass capacity M_{R} of compressor 14; according to an equivalent embodiment, the control law CL1 provides a target opening WG of the solenoid control valve 34 of the wastegate valve 16 as a function of an output supplied by the internal combustion engine 1 and of a volumetric efficiency of the internal combustion engine 1, or as a function of a rotation speed of the internal combustion engine 1 and of a volumetric efficiency of the internal combustion engine 1 (obviously, various combinations of the parameters of the internal combustion engine 1 are also possible).

It is worth noting that the boost ratio RP (i.e. the ratio of the boost pressure P with the atmospheric pressure Pₐₜₘ) and the boost jump ΔP (i.e. the difference between the boost pressure P and the atmospheric pressure Pₐₜₘ which is calculated by subtracting the atmospheric pressure Pₐₜₘ from the boost pressure P) are substantially equivalent to each other; hence, using the boost ratio RP is equivalent to using the boost jump and vice versa.

During the normal operation of the internal combustion engine 1, the electronic control unit 21 determines a target boost pressure P_{obj} in a known manner, which must be followed, if required, by driving the solenoid control valve 34 of the wastegate valve 16. The target boost pressure P_{obj} is determined as a function of the current engine point (i.e. of the current state of the internal combustion engine 1) and of the driver's requests to optimize performances and consumptions. The target boost ratio RP_{obj} (i.e. the ratio of the target boost pressure P_{obj} with the atmospheric pressure Pₐₜₘ) and the target boost jump OPobj (i.e. the difference between the target boost pressure P_{obj} and the atmospheric pressure Pₐₜₘ, which is calculated by subtracting the atmospheric pressure Pₐₜₘ from the target boost pressure P_{obj}) may apparently be determined from the target boost pressure P_{obj}.

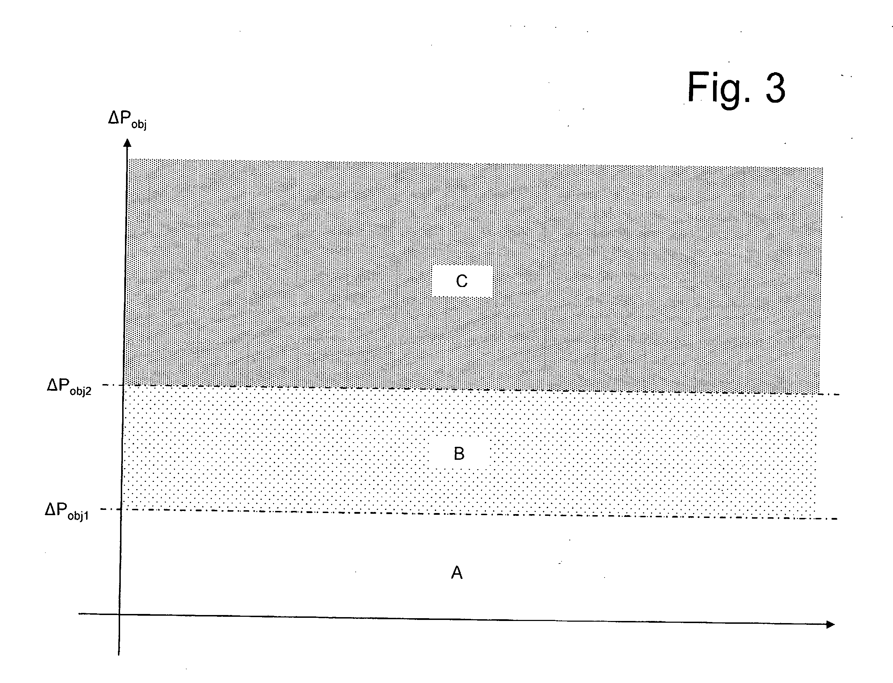

Three zones of operation (shown in figure 3) are determined for the wastegate valve 16 as a function of the target boost pressure P_{obj} (or better, as a function of the target boost jump AP_{obj} or alternatively, as a function of the target boost ratio RP_{obj}): a zone of operation A free from boosting (called "ASPIRATE") in which the target boost jump AP_{obj} is null or very small (i.e. the target boost ratio RP_{obj} is unitary or a little higher than the unit), a zone of operation B (called "PRE-ACTIVE") in which the target boost jump AP_{obj} is small (i.e. the target boost ratio RP_{obj} is slightly higher than the unit), and a zone of operation C (called "ACTIVE") in which the target boost jump AP_{obj} is high (i.e. the target boost ratio RP_{obj} is much higher than the unit).

The boundary between the zones of operation A, B and C is determined by two thresholds ΔP_{obj1} (slightly higher than zero) and ΔP_{obj2} (significantly higher than zero): when the target boost jump ΔP_{obj} is lower than the threshold ΔP_{obj1}, the wastegate valve 16 is in the zone of operation A, when the target boost jump ΔP_{obj} is between the thresholds ΔP_{obj1} and ΔP_{obj2}, the wastegate valve 16 is in the zone of operation B, and when the target boost jump ΔP_{obj} is higher than the threshold ΔP_{ob}j₂ the wastegate valve 16 is in the zone of operation C. In order to avoid continuous oscillations between the zones of operation A, B and C, the two thresholds ΔP_{obj1} and ΔP_{obj2} are provided with a certain hysteresis. Threshold ΔP_{obj1} is generally close to zero (i.e. about zero) and hence corresponding to a target boost pressure P_{obj} close to the atmospheric pressure Pₐₜₘ. According to a possible embodiment, the two thresholds ΔP_{obj1} and ΔP_{obj2} may vary as a function of the actual reduced mass capacity M_{R} of compressor 14 and/or of the rotation speed of the internal combustion engine 1.

In use, during normal operation of the internal combustion engine 1, the electronic control unit 21 measures the actual boost pressure P (i.e. the pressure of the air along the suction conduit 6 downstream of compressor 14), measures or estimates (in a known manner) the atmospheric pressure Pₐₜₘ, and estimates (in a known manner) the actual reduced mass capacity M_{R} of compressor 14. Moreover, during normal operation of the internal combustion engine 1, the electronic control unit 21 determines the target boost pressure P_{obj} in a known manner, which must be followed, if required, by driving the solenoid control valve 34 of the wastegate valve 16. In order to drive the solenoid control valve 34 of the wastegate valve 16, the electronic control unit 21 determines a target position WG_{obj} of the solenoid control valve 34 of the wastegate valve 16, which is generally actuated with an open loop control.

Moreover, in use, the electronic control unit 21 determines which is the current zone of operation A, B or C of the wastegate valve 16 as a function of the target boost jump ΔP_{obj} (i.e. by comparing the target boost jump ΔP_{obj} with the two thresholds ΔP_{obj1} and ΔP_{obj2}), and depending on the current zone of operation A, B or C, it differentiates the type of control used for determining the target position WG_{obj} of the solenoid control valve 34 of the wastegate valve 16.

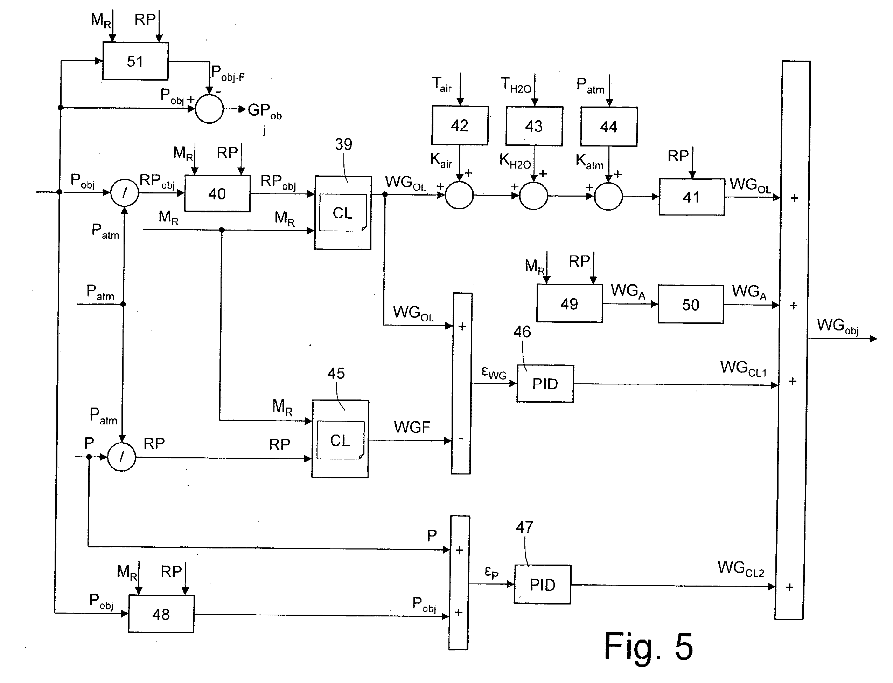

As shown in figure 5, when the wastegate valve 16 is in the zones of operation B and C, the target position WG_{obj} of the solenoid control valve 34 of the wastegate valve 16 is calculated by algebraically adding (i.e. considering the sign) four contributions: an open loop contribution WG_{OL}, a closed loop contribution WG_{CL1}, a closed loop contribution WG_{CL2}, and an adaptive contribution WG_{A}.

The open loop contribution WG_{OL} is determined by using the control law CL1: a target compression ratio RP_{obj} (which is equal to the ratio of the target boost pressure P_{obj} with the atmospheric pressure Pₐₜₘ and is equivalent to the target boost pressure P_{obj} or to the target boost jump ΔP_{obj}) is determined as a function of the target boost pressure P_{obj}; a calculating block 39 is thus provided with the target compression ratio RP_{obj} and the actual reduced mass capacity M_{R}, which provides the open loop contribution WG_{OL} by using the control law CL1.

Before being supplied to the calculating block 39, the target compression ratio RP_{obj} is preferably filtered by means of a low-pass filter 40 of the first order to reduce the variation speed; in other words, the target compression ratio RP_{obj} is filtered by means of the low-pass filter 40 so as to slow down the evolution of the target compression ratio RP_{obj}, thus "smoothing" any stepped variations. The function of the low-pass filter 40 is to make the evolution of the target compression ratio RP_{obj} more "real" (i.e. closer to what actually happens), because it is apparent that stepped (or however very fast) variations of the actual boost pressure P are not possible because of apparent physical limitations due to the inertias involved. According to a preferred embodiment, a cutting frequency of the low-pass filter 40 is determined as a function of the reduced mass capacity M_{R} of compressor 14 and of the actual boost ratio RP according to an experimentally determined law.

According to a preferred embodiment, the open loop contribution WG_{OL} provided by the calculating block 39 is first compensated by means of three compensation parameters Kₐₜₘ, K_{H20} and Kₐᵢᵣ and then filtered by means of a low-pass filter 41 of the first order to reduce the variation speed. The compensation parameter Kₐᵢᵣ is determined by a calculating block 42 as a function of the temperature Tₐᵢᵣ of the aspirated air and by using a linear equation having experimentally determined coefficients, the compensation parameter K_{H20} is determined by a calculating block 43 as a function of the temperature T_{H2O} of a cooling liquid of the internal combustion engine 1 and by using a linear equation having experimentally determined coefficients, and compensation parameter Kₐₜₘ is determined by a calculating block 44 as a function of the atmospheric pressure Pₐₜₘ and by using a linear equation having experimentally determined coefficients; the coefficients of the linear equation which provides the compensation parameter Kₐₜₘ as a function of the atmospheric pressure Pₐₜₘ could not be constant but vary as a function of the reduced mass capacity M_{R} of compressor 14 and of the actual boost ratio RP according to an experimentally determined law.

The open loop contribution WG_{OL} is filtered by means of the low-pass filter 41 so as to slow down the evolution of the open loop contribution WG_{OL}, thus "smoothing" any stepped variations. The function of the low-pass filter 41 is to make the evolution of the open loop contribution WG_{OL} more "real" (i.e. closer to what actually happens), because it is apparent that stepped (or however very fast) variations of the position of the solenoid control valve 34 are not possible because of apparent physical limitations due to the inertias involved. According to a preferred embodiment, a cutting frequency of the low-pass filter 41 is determined as a function of the actual boost ratio RP according to an experimentally determined law. According to a preferred embodiment, the open loop contribution WG_{OL} is asymmetrically filtered by means of the low-pass filter 41: the open loop contribution WG_{OL} is filtered by means of the low-pass filter 41 only when the open loop contribution WG_{OL} varies to open the wastegate valve 16 and not when the open loop contribution WG_{OL} varies to close the wastegate valve 16; thereby, the intervention of compressor 14 is faster (more reactive), thus promoting the response readiness of the internal combustion engine 1 (hence reducing the "turbo-lag"), while the turning off of compressor 14 is softer. It is worth noting that when the maximum performance is sought, an "abrupt" reaction of the internal combustion engine 1 is accepted (rather, it is desired in certain cases), while in other circumstances, a "soft" behaviour (i.e. free from too fast and decided interventions) is essentially desired. It is worth noting that due to the presence of the low-pass filter 41, possible oscillating phenomena in the pneumatic actuator 17 of the wastegate valve 16 are also eliminated or strongly reduced; such a result is obtained due to the action of the low-pass filter 41 which avoids the flexible membrane 28 and the contrast spring 38 from being provided with too fast stresses which could trigger oscillating phenomena.

The closed loop contribution WG_{CL1} of the target position of the solenoid control valve 34 of the wastegate valve 16 is obtained by using a fictitious position WGF of the wastegate valve as a feedback variable (therefore a control magnitude which does not have an accurate correspondence in physical reality), which is not determined by means of a direct measurement with an actual measuring sensor, but by using the control law CL1 as a measuring sensor. In other words, a calculating block 45 provides the fictitious position WG of the wastegate valve 16 by applying the control law CL1 as a function of the actual boost pressure P (or better, of the actual boost ratio) and of the reduced mass capacity M_{R} of compressor 14; therefore, the fictitious position WGF of the wastegate valve 16 corresponding to the position that the wastegate valve 16 should have according to the control law CL1 (hence affected by all the errors of the control law CL1) in combination with the actual boost ratio RP and the actual reduced mass capacity M_{R} of compressor 14. The fictitious position WGF of the wastegate valve 16 is compared with the open loop contribution WG_{OL} which corresponds to the position that the wastegate valve 16 should have according to the control law CL1 (hence affected by all the errors of the control law CL1) in combination with the target compression ratio RP_{obj} and the actual reduced mass capacity M_{R} of compressor 14; in other words, the open loop contribution WG_{OL} represents a target of the fictitious position WGF because it is calculated by using the target compression ratio RP_{obj}. In particular, a position error ε_{WG} is calculated by performing the difference between the open loop contribution WG_{OL} of the target position WG_{obj} of the solenoid control valve 34 of the wastegate valve 16, and the fictitious position WGF of the wastegate valve 16, and a PID controller 46 is provided with such a position error ε_{WG}, which controller attempts to cancel the position error ε_{WG}.

Comparing two values (the open loop contribution WG_{OL} which represents a target of the fictitious position WGF and the fictitious position WGF) obtained by the control law CL1 allows the errors of the control law CL1 to be compensated and the strongly non linear behaviour of the wastegate valve 16 to be linearized; thereby, the PID controller 46 may operate with increased stability and the calibration of the control parameters (i.e. of the proportional, supplementary, derivative coefficients and of the saturation thresholds) of the PID controller 46 is relatively simple. Moreover, the control loop of the PID controller 46 is auto-compensated, with respect to the temperature Tₐᵢᵣ of the aspirated air, to the temperature T_{H2O} of a cooling liquid of the internal combustion engine 1, and to the atmospheric pressure Pₐₜₘ.

The closed loop contribution WG_{CL2} of the target position WG_{obj} of the solenoid control valve 34 of the wastegate valve 16 is determined by using the boost pressure P as a feedback variable; a pressure error ε_{P} is thus calculated by performing the difference between the target boost pressure P_{obj} and the actual boost pressure P, and a PID controller 47 is provided with the pressure error ε_{WG}, which attempts to cancel the pressure error ε_{WG}.

Before being compared with the actual boost pressure P, the target boost ratio P_{obj} is preferably filtered by means of a low-pass filter 48 of the first order to reduce the variation speed; in other words, the target boost pressure P_{obj} is filtered by means of the low-pass filter 48 so as to slow down the evolution of the target boost pressure P_{obj}, thus "smoothing" any stepped variations. The function of the low-pass filter 48 is to make the evolution of the target boost pressure P_{obj} more "real" (i.e. closer to what actually happens), because it is apparent that stepped (or however very fast) variations of the actual boost pressure P are not possible because of apparent physical limitations due to the inertias involved. According to a preferred embodiment, a cutting frequency of the low-pass filter 48 is determined as a function of the reduced mass capacity M_{R} of compressor 14 and of the actual boost ratio RP according to an experimentally determined law.

In order to avoid negative interferences between the action of controller 46 and the action of controller 47, the dynamics of controller 46 is different from the dynamics of controller 47; in particular, controller 46 is essentially proportional and derivative (i.e. has high proportional and derivative coefficients, and a small integral coefficient) to be ready (i.e. act quickly), while controller 47 is essentially integral (i.e. has small proportional and derivative coefficients, and a high integral coefficient) to ensure the convergence between the target boost pressure P_{obj} and the actual boost pressure P. Therefore, controller 46 is used to quickly and readily react to the variations of the target boost pressure P_{obj}, while controller 47 is used to converge the actual boost pressure P with the target boost pressure P_{obj} at the end of the transient.

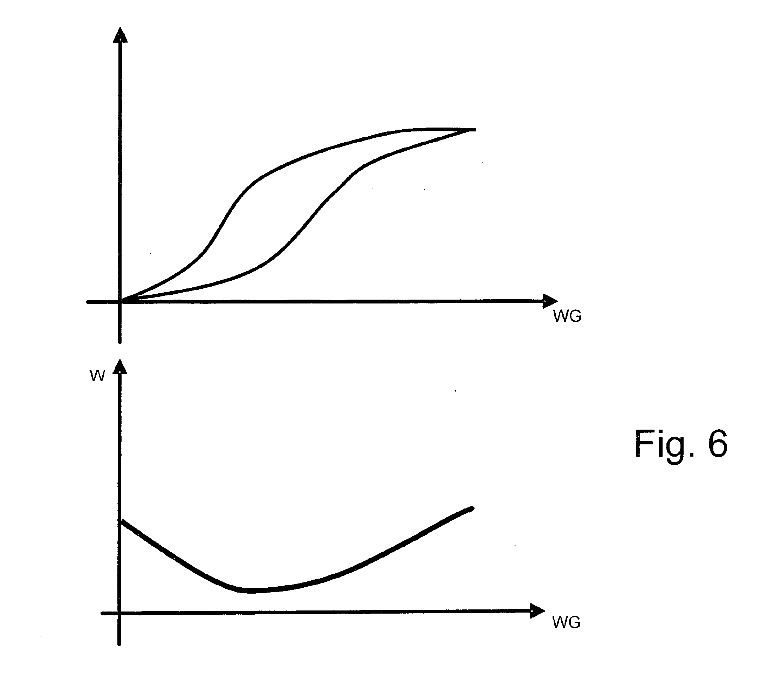

In essence, the adaptive contribution WG_{A} of the target position WG_{obj} of the solenoid control valve 34 of the wastegate valve 16 is a "historic memory" of the preceding actuations of the wastegate valve 16 and considers the control interventions performed in the past. The adaptive contribution WG_{A} is saved in a memory 49 of the electronic control unit 21 and is cyclically updated when the turbocharger 12 is at stabilized speed (for example, when the reduced mass capacity M_{R} of compressor 14 and the boost ratio RP remain approximately constant for at least an interval of time of predetermined length) and by using an integral term of the PID controller 47 and/or of the PID controller 46; in essence, the adaptive contribution WG_{A} is equal to an "average" of the past integral terms of PID controller 47 and/or of PID controller 46 at stable speeds of turbocharger 12. The adaptive contribution WG_{A} saved in memory 49 is updated when turbocharger 12 is at stable speed, by using the integral term of PID controller 47 and/or of PID controller 46 weighted by means of a weight W, which is essentially a function of an actual position WG of the solenoid control valve 34 of the wastegate valve 16, so that the weight W is minimum when the hysteresis in the control of the wastegate valve 16 is maximum (as shown in figure 6); thereby, the adaptivity is always gradual (i.e. the last integral term of the PID controller 47 and/or of the PID controller 46 may not distort the adaptive contribution WG_{A} saved in memory 49) and values deformed by the hysteresis are avoided from being loaded into the adaptive contribution WG_{A}.

The adaptive contribution WG_{A} may generally vary as a function of the reduced mass capacity M_{R} of compressor 14 and of the boost ratio RP. Moreover, the adaptive contribution WG_{A} is filtered by means of a low-pass filter 50 of the first order to reduce the variation speed; in other words, the adaptive contribution WG_{A} is not abruptly provided, but is gradually provided to avoid stepped interventions, which never correspond to the physical reality, and thus to promote the convergence of the control. According to a preferred embodiment, the cutting frequency of the low-pass frequency 50 is constant; alternatively, the cutting frequency of the low-pass filter 50 could be varied as a function of the reduced mass capacity M_{R} of compressor 14 and of the boost ratio RP.

The integral term of the PID controllers 46 and 47 contains a "memory" of the errors occurred in the immediate past therein; therefore, when some variations of the surrounding circumstances occur (for example, going from the zone of operation C with a high boost pressure to the zone of operation B with an intermediate boost pressure, or in the case of fast variation, i.e. of strong transient, of the target boost pressure P_{obj}), the "memory" of the errors occurred in the immediate past which is contained in the integral term of the PID controllers 46 and 47 may have some negative effects because it represents a circumstance which no is longer present. In order to avoid the negative effects of the "memory" of the errors occurred in the immediate past which is contained in the integral term of the PID controllers 46 and 47, the electronic control unit 21 clears the integral term of the PID controllers 46 and 47 when the actual boost pressure P decreases by going from the zone of operation C at high boost pressure to the zone of operation B at intermediate boost pressure. Moreover, the electronic control unit 21 clears (or possibly "freezes", i.e. prevents a further growth) each integral term of the PID controllers 46 and 47 in case of fast variation, i.e. of strong transient, of the target boost pressure P_{obj} if the integral term is high, i.e. is greater than a predefined threshold value as far as absolute value is concerned; in other words, when a fast variation of the target boost pressure P_{obj} occurs and an integral term of the PID controllers 46 and 47 is greater than a predefined threshold value as far as absolute value is concerned, the integral term is then cleared or frozen (i.e. is no longer varied up to the end of the strong transient).

In order to establish if there is a strong transient of the target boost pressure P_{obj} (i.e. of a fast variation of the target boost pressure P_{obj}), the electronic control unit 21 compares the target boost pressure P_{obj} with a target boost pressure P_{obj}-_{F} filtered by means of a low-pass filter 51 to determine a gradient GP_{obj} of the target boost pressure P_{obj} which indicates the variation speed of the target boost pressure P_{obj}. In other words, the gradient GP_{obj} of the target boost pressure P_{obj} is calculated by performing the difference between the target boost pressure P_{obj} and the target boost pressure P_{obj}-_{F} filtered by means of the low-pass filter 51. When the gradient GP_{obj} of the target boost pressure P_{obj} is higher than a threshold value, the electronic control unit 21 then establishes a strong transient of the target boost pressure P_{obj} (i.e. of a fast variation of the target boost pressure P_{obj}) and hence clears (or possibly "freezes") the integral term of the PID controllers 46 and 47; such a threshold value may be a function of the boost ratio RP and of the reduced mass capacity M_{R} of compressor 14. According to a preferred embodiment, a cutting frequency of the low-pass filter 51 is determined as a function of the reduced mass capacity M_{R} of compressor 14 and of the actual boost ratio RP according to an experimentally determined law.

According to a preferred embodiment, the electronic control unit 21 varies the integral coefficients of the PID controllers 46 and 47 as a function of the pressure error ε_{P} so as to vary the features of the control as the entity of the pressure error ε_{P} varies. In particular, the electronic control unit 21 varies the integral coefficients of the PID controllers 46 and 47 in an inversely proportional manner with respect to the pressure error ε_{P} so that the smaller the pressure error ε _{P}, the larger the integral coefficients of the PID controllers 46 and 47, and varies the proportional coefficients of the PID controllers 46 and 47 in a directly proportional manner with respect to the pressure error ε_{P} so that the larger the pressure error ε_{P,} the larger the proportional coefficients of the PID controllers 46 and 47. In other words, the integral term of the PID controllers 46 and 47 (directly proportional to the integral coefficients of the PID controllers 46 and 47) serves to ensure the convergence between the actual boost pressure P and the target boost pressure P_{obj}, but such a convergence is achieved at the end of a transient when the pressure error ε_{P} is relatively small; at the beginning of the transient when the pressure error ε_{P} is large, the integral term of the PID controllers 46 and 47 may generate some oscillations and thus, in order to avoid such a risk, the integral coefficients of the PID controllers 46 and 47 are reduced at the beginning of the transient when the pressure error ε_{P} is large. The opposite is applied to the proportional term of the PID controllers 46 and 47 (directly proportional to the proportional and derivative coefficients of the PID controllers 46 and 47), which must be large when the pressure error ε_{P} is large to ensure the response speed, and must be small when the pressure error ε_{P} is small to ensure convergence.

In the above-described low-pass filters 40, 48 and 51, the cutting frequency is determined as a function of the reduced mass capacity M_{R} of compressor 14 and of the actual boost ratio RP; according to an equivalent embodiment, the cutting frequency is determined as a function of the rotation speed of the internal combustion engine 1 and as a function of a gear engaged in a transmission which receives motion from the internal combustion engine 1. To this end, it is worth noting that the dynamics of turbocharger 12 greatly varies as a function of the engaged gear, because in the low gears, the increase of the rotation speed of the internal combustion engine 1 is fast, therefore the increase of the rotation speed of turbocharger 12 is fast as well; instead, at high gears, the increase of the rotation speed of the internal combustion engine 1 is slow, therefore the increase of the rotation speed of turbocharger 12 is slow as well.

Similarly, the threshold value with which the gradient GP_{obj} of the target boost pressure P_{obj} is compared to establish if there is a strong transient of the target boost pressure P_{obj} may also be a function of the reduced mass capacity M_{R} of compressor 14 and of the actual boost ratio RP or may be a function of the rotation speed of the internal combustion engine 1 of an engaged gear in a transmission which receives motion from the internal combustion engine 1.

In the control diagram shown in figure 5 and described above, the boost ratio RP is used, but according to an equivalent embodiment (not shown), the boost pressure P (or the boost jump ΔP) may be used instead of the boost ratio RP.

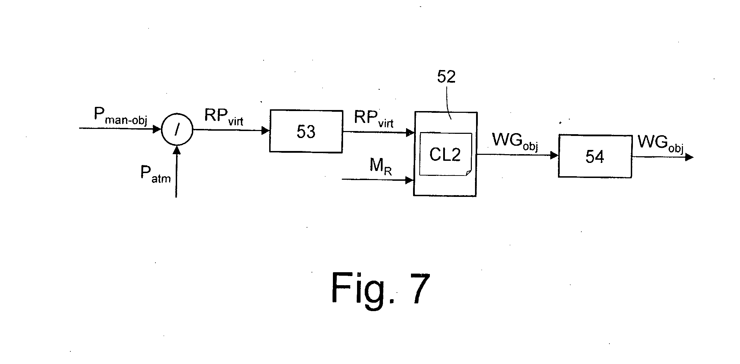

As shown in figure 7, when the wastegate valve 16 is in the zone of operation A, the target position WG_{obj} of the solenoid control valve 34 of the wastegate valve 16 is directly determined having an open loop by using a control law CL2, which is conceptually similar to the control law CL1 and is experimentally determined similarly to the control law CL1. As a function of a target manifold pressure Pₘₐₙ-_{obj} ( i . e . of the pressure desired in the suction manifold 4 and which is lower than the atmospheric pressure Pₐₜₘ), a virtual compression ratio RPᵥᵢᵣₜ is determined, which is lower than the unit and is equal to the ratio of the target manifold pressure Pₘₐₙ-_{obj} with the atmospheric pressure Pₐₜₘ; according to an alternative embodiment, the compression ratio RPᵥᵢᵣₜ may coincide with the suction efficiency of the engine, i.e. with the ratio of the estimated or target air mass trapped per cylinder with the air mass which fills the unitary swept volume under reference circumstances (for example, 25°C and 1024 mBar, that is 10240 Pascal).

Therefore, a calculating block 52 is provided with the virtual compression ratio RPᵥᵢᵣₜ and the actual reduced mass capacity M_{R}, which block provides the target position WG_{obj} with open loop, by using the control law CL2.

Before being supplied to the calculating block 52, the virtual compression ratio RPᵥᵢᵣₜ is preferably filtered by means of a low-pass filter 53 of the first order to reduce the variation speed; in other words, the virtual compression ratio RPᵥᵢᵣₜ is filtered by means of the low-pass filter 53 so as to slow down the evolution of the virtual compression ratio RPᵥᵢᵣₜ, thus "smoothing" any stepped variations. The function of the low-pass filter 53 is to make the evolution of the virtual compression ratio RPᵥᵢᵣₜ more "real" (i.e. closer to what actually happens), because it is apparent that stepped (or however very fast) variations of the actual boost pressure P are not possible because of apparent physical limitations due to the inertias involved.

According to a preferred embodiment, the target position WG_{obj} is filtered by means of a low-pass filter 54 of the first order to reduce the variation speed. The target position WG_{obj} is filtered by means of the low-pass filter so as to slow down the evolution of the target position, thus "smoothing" any stepped variations. The function of the low-pass filter 54 is to make the evolution of the target position more WG_{obj} "real" (i.e. closer to what actually happens), because it is apparent that stepped (or however very fast) variations of the position of the solenoid control valve 34 are not possible because of apparent physical limitations due to the inertias involved. According to a preferred embodiment, a cutting frequency of the low-pass filter 41 is determined as a function of the actual boost ratio RP according to an experimentally determined law. According to a preferred embodiment, the target position WG_{obj} is asymmetrically filtered by means of the low-pass filter 54: the target position WG_{obj} is filtered by means of the low-pass filter 54 only when the target position WG_{obj} varies to open the wastegate valve 16 and not when the target position WG_{obj} varies to close the wastegate valve 16; thereby, the intervention of compressor 14 is faster (more reactive) thus promoting the response readiness of the internal combustion engine 1 (hence reducing the "turbo-lag") while the turning off of compressor 14 is softer.

As already mentioned, the electronic control unit 21 determines, in use, which is the current zone of operation A, B or C of the wastegate valve 16 only as a function of the target boost jump ΔP_{obj} (by comparing the target boost jump ΔP_{obj} with the two thresholds ΔP_{obj1} and ΔP_{ob}j₂), and depending on the current zone of operation A, B or C, it differentiates the type of control used for determining the target position WG_{obj} of the solenoid control valve 34 of the wastegate valve 16. When the wastegate valve 16 is in the zone of operation A (i.e. the target boost jump ΔP_{obj} is lower than threshold Δ P_{obj1}), the electronic control unit 21 determines the target position WG_{obj} by using the simplified control logic (merely with open loop) shown in figure 7. Instead, when the wastegate valve is in the zones of operation B and C (i.e. the target boost jump ΔP_{obj} is higher than threshold ΔP_{obj1}), the electronic control unit 21 determines the target position WG_{obj} by using the control logic shown in figure 5. Moreover, the control logic shown in figure 5 is differentiated depending on the wastegate valve 16 being both in the zone of operation B (i.e. the target boost jump ΔP_{obj} is between the two thresholds ΔP_{obj1} and ΔP_{obj2}) or in the zone of operation C (i.e. the target boost jump ΔP_{obj} is higher than threshold ΔP_{obj2}); in this embodiment, more "reactive" control parameters are generally used in the zone of operation C and "slower" control parameters are used in the zone of operation B.

For example, to make the control in the zone of operation B slower than the control in the zone of operation C, smaller proportional, integrative and/or derivative coefficients of the PID controllers 46 and 47 are used in the zone of operation B with respect to similar coefficients used in the zone of operation C, and smaller saturation thresholds are used in the zone of operation B with respect to similar saturation thresholds used in the zone of operation C (a saturation threshold determines the freezing, i.e. the blocking, of the further increase of a corresponding proportional, integral or derivative term when the term itself exceeds the saturation threshold).

According to a possible embodiment, when the wastegate valve 16 goes from the zone of operation B to the zone of operation C, the electronic control unit 21 modifies the operating parameters of the low-pass filters 48 and 51 by using the actual boost pressure P.

According to a further embodiment, the electronic control unit 21 determines, in use, which is the current zone of operation A, B or C of the wastegate valve 16 as a function of the target boost jump ΔP_{obj} (by comparing the target boost jump ΔP_{obj} with the two thresholds ΔP_{obj1} and ΔP_{obj2}) and also as a function of the actual boost jump ΔP (by comparing the actual boost jump ΔP with threshold ΔP_{obj2}). In this embodiment, the wastegate valve 16 is in the zone of operation A when the target boost jump ΔP_{obj} is lower than threshold ΔP_{obj1,} the wastegate valve 16 is in the zone of operation B when the target boost jump ΔP_{obj} is between the two thresholds ΔP_{obj1} and ΔP_{obj2,} but also when the target boost jump ΔP_{obj} is higher than threshold ΔP_{obj2} and the actual boost jump ΔP is simultaneously lower than threshold ΔP_{obj2,} and the wastegate valve 16 is in the zone of operation C only when both the target boost jump ΔP_{obj} and the actual boost jump ΔP are higher than threshold ΔP_{obj2}. In other words, the wastegate valve 16 is always in the zone of operation A when the target boost jump ΔP_{obj} is lower than threshold ΔP_{obj1}, the wastegate valve 16 is always in the zone of operation B when the target boost jump ΔP_{obj} is higher than threshold ΔP_{obj1} and the actual boost jump ΔP is lower than threshold ΔP_{obj2} or when the target boost jump ΔP_{obj} is between the two thresholds ΔP_{obj1} and ΔP_{obj2}, and the wastegate valve 16 is in the zone of operation C only when both the target boost jump ΔP_{obj} and the actual boost jump ΔP are higher than threshold Δ P_{ob}j₂. In this embodiment, the control in the zone of operation C is slower than the control in the zone of operation B. Thereby, the control has a very fast response (hence the response turbo-lag is minimized) when the actual boost pressure P must significantly grow (i.e. when the actual boost jump ΔP is lower than threshold ΔP_{obj2} and therefore the wastegate valve 16 is in the zone of operation B) and instead, the control has a slower response (i.e. more stable and with less oscillations, i.e. the actual boost pressure P oscillates less and hence the operation of the internal combustion engine 1 is more regular) when the actual boost pressure P must not significantly grow ( i . e . when the actual boost jump ΔP is higher than threshold ΔP_{obj2} and hence the wastegate valve 16 is in the zone of operation C).

According to a possible embodiment, an adjustment of the behaviour of the internal combustion engine 1 is included, which provides a sport mode which favours performances and an economy mode which favours consumption reduction. Normally, the control in the zones of operation B and C is not modified as a function of the mode selected (economy or sport mode). According to an alternative embodiment, the control in the zones of operation B and C is modified as a function of the mode selected (economy or sport mode): when the economy mode which favours consumption reduction is selected, a slower control is used in the zones of operation B and C, while when the sport mode is selected, a more reactive control is used in the zones of operation B and C.

Preferably, as a function of the mode selected (sport mode which favours performances or economy mode which favours consumption reduction), the control law CL2 is also varied, which provides the target position WG_{obj} with open loop when the wastegate valve 16 is in the zone of operation A (i.e. when the target boost jump ΔP_{obj} is lower than threshold ΔP_{obj1)} .

As already mentioned, when the wastegate valve 16 is in the zone of operation A (i.e. the target boost jump ΔP_{obj} is lower than threshold ΔP_{obj1),} the electronic control unit 21 determines the target position WG_{obj} by using the simplified control logic (merely with open loop) shown in figure 7. Such a control logic provides keeping the wastegate valve 16 partially closed (i.e. only partially open, i.e. not completely open) so as to obtain a boost pressure P slightly higher than the atmospheric pressure Pₐₜₘ ( i . e . a boost jump ΔP slightly higher than zero, i.e. a boost ratio RP slightly higher than the unit) and higher than the target boost pressure P_{obj} (in any case, the boost pressure must however be higher than the minimum pressure required to make the desired engine load, that is the mass capacity of target air). Such a circumstance "contrasts" with what is required by the engine control, which would want a target boost pressure P_{obj} no higher than the atmospheric pressure Pₐₜₘ, but does not involve any type of problem because the actual boost pressure P, which is higher than the target boost pressure P_{obj} is simply compensated by acting on the throttle valve 8 and/or on the phase of the suction valves (in the case of variable phase of the suction valves). In other words, to aspirate the desired air amount into the cylinders, the engine control drives the throttle valve 8 and/or the phase of the suction valves (in the case of variable phase of the suction valves) as a function of the actual pressure in the suction manifold 4 and therefore continuously adapts to the actual pressure in the suction manifold 4.

This control logic, which keeps an actual boost pressure P higher than the target boost pressure P_{obj}, may be a penalizing situation in terms of consumption because it forces the engine control to operate the throttle valve 8 and/or the suction valves (in the case of variable phase of the suction valves) with low performances, and because the compression "work" carried out by turbocharger 12 is useless because it is not required (the use of turbocharger 12 involves the increase of the back-pressure at the exhaust and thus increases the pumping work of the pistons with a consequential increase of consumptions). On the other hand, this control logic improves the performances because turbocharger 12 is always kept active and therefore is capable of entering in action very quickly (i.e. a "boost reserve" exists, which may be used when needed): when a sudden, fast request for a significant increase of the drive torque (i.e. when the driver decidedly pushes down on the accelerator pedal for example to perform an overtaking) occurs from a condition of modest drive torque (low rotation speeds and contained speed, i.e. clearly in the zone of operation A), turbocharger 12 quickly responds without a considerable turbo-lag.

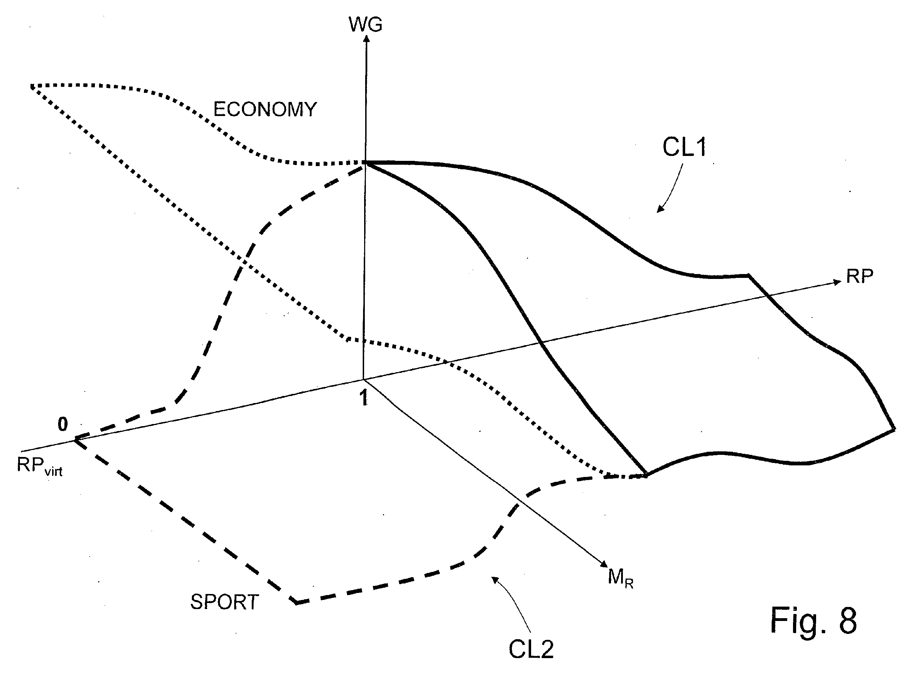

It is worth noting that the control law CL2 is experimentally determined as a function of the control law CL1 so as to be the natural continuation of the control law CL1 in the boundary between the zone of operation A and the zone of operation B. Thereby, the two control laws CL1 and CL2 in the boundary between the zone of operation A and the zone of operation B have a connection free from steps (discontinuity of the first order) and free from slope changes (discontinuity of the second order). Such a circumstance is clearly shown in the graph in figure 8 in which the control law CL1 is shown on the right (compression ratio RP higher than 1) and the control law CL2 is shown on the left (virtual compression ratio RPᵥᵢᵣₜ lower than 1), both in the "SPORT" version (sport mode which favours performances) and in the "ECONOMY" version (economy mode which favours consumption reduction): it should be noted that in the boundary zone (unitary compression ratio RP and unitary virtual compression ratio RPᵥᵢᵣₜ,) the two control laws CL1 and CL2 have a connection free from steps (discontinuity of the first order) and free from slope changes (discontinuity of the second order).

As already mentioned, when the wastegate valve 16 is in the zone of operation A (i.e. the target boost jump ΔP_{obj} is lower than threshold ΔP_{obj1}), the electronic control unit 21 determines the target position WG_{obj} by using the simplified control logic (merely with open loop) shown in figure 7; as a function of the mode selected (sport mode which favours performances and economy mode which favours consumption reduction), the control law CL2 is also varied, which provides the target position WG_{obj} with open loop. The control law CL2 in the sport mode obviously tends to keep the actual boost pressure P higher than the target boost pressure P_{obj} in order to have a "boost reserve" which may be used when needed (i.e. increasing the response readiness by reducing the turbo lag); instead, the control law CL2 in the economy mode tends to always keep the wastegate valve 16 completely open so as to minimize the back-pressure at the exhaust and hence lower the pumping work of the pistons (i.e. reduce consumptions).

The above-described control method of the wastegate valve 16 has several advantages.

Firstly, the above-described control method of the wastegate valve 16 is simple and affordable to be implemented in an electronic control unit of an internal combustion engine because it uses measures provided by sensors which are normally present in modern internal combustion engines (thus no hardware modification is required) and it does not require a large calculating capacity or large occupation of memory.

Moreover, the above-described control method of the wastegate valve 16 always allows a very fast response (i.e. free from significant lags) of turbocharger 12 to be obtained when the sport mode is selected.

## Claims

1. A control method of the wastegate valve (16) in an internal combustion engine (1) turbocharged by a turbocharger (12); the control method comprises the steps of:
determining a target boost pressure (P_{obj});
dividing the operating range of the wastegate valve (16) according to the target boost jump (ΔP_{obj}), i.e. the difference between the target boost pressure (P_{obj}) and the atmospheric pressure (Pₐₜₘ), in at least two distinct zones of operation: a first zone (A) of operation in which the target boost jump (ΔP_{obj}) is lower than a threshold (ΔP_{obj1}) and a second zone (B, C) of operation in which the target boost jump (ΔP_{obj}) is higher than the threshold (ΔP_{obj1}); and
determining a target position (WG_{obj}) of the wastegate valve (16) according to the target boost pressure (P_{obj});
the control method **is characterized in that** it comprises the additional step of determining, when the wastegate valve (16) is in the first zone (A) of operation, the target position (WG_{obj}) of the wastegate valve (16) so as to obtain an actual boost pressure (P) higher than the target boost pressure (P_{obj}) and than the atmospheric pressure (Pₐₜₘ).

2. A control method according to claim 1, wherein the threshold (ΔP_{obj1}) is close to zero.

3. A control method according to claim 1 or 2 and comprising the additional step of determining, when the wastegate valve (16) is in the first zone (A) of operation, the target position (WG_{obj}) of the wastegate valve (16) open loop through a first control law (CL2).

4. A control method according to claim 3 and comprising the additional step of determining, when the wastegate valve (16) is in the second zone (B, C) of operation, the target position (WG_{obj}) of the wastegate valve (16) open loop and close loop through a second control law (CL1).

5. A control method according to claim 4 wherein in the boundary between the first zone (A) of operation and the second zone (B) of operation the two control laws (CL2, CL1) have a connection without discontinuity.

6. A control method according to claim 3, 4 or 5 and comprising the additional steps of:
determining the virtual compression ratio (RPᵥᵢᵣₜ) equal to a ration between a target collector pressure (P_{man-obj}) and the atmospheric pressure (Pₐₜₘ); and
determining the target position (WG_{obj}) of the wastegate valve (16) as a function of the virtual compression ratio (RPᵥᵢᵣₜ) and by using the first control law (CL2) which provides the target position (WG_{obj}) of the wastegate valve (16) according to the virtual compression ratio (RPᵥᵢᵣₜ).

7. A control method according to claim 6 wherein the first control law (CL2) provides the target position (WG_{obj}) of the wastegate valve (16) as a function of the virtual compression ratio (RPᵥᵢᵣₜ) and of a reduced mass capacity (M_{R}).

8. A control method according to claim 6 or 7 and comprising the additional steps of:
filtering the virtual compression ratio (RPᵥᵢᵣₜ) using a first low-pass filter (53) to reduce the speed of variation; and
filtering the target position (WG_{obj}) of the wastegate valve (16) through a second low-pass filter (54) to reduce the speed of variation.

9. A control method according to claim 8, wherein the second low-pass filter (54) is asymmetrical and filters only when the target position (WG_{obj}) of the wastegate valve (16) changes to open the wastegate valve (16) and doesn't filter when the target position (WG_{obj}) of the wastegate valve (16) changes to close the wastegate valve (16).

10. A control method according to one of the claims from 6 to 9 and comprising the additional steps of:
selecting a sport mode that favours performance or an economy mode that favours consumption reduction; and
differentiating the first control law (CL2) to be used depending on the selected mode.

11. A control method according to claim 10, wherein, in the first control law (CL2), the sport mode requires a higher effective boost pressure (P), keeping all other parameters identical, compared to the economy mode.

12. A Control method according to one of the claims from 1 to 11 and comprising the additional step of differentiating the control strategy in the second zone (B, C) as a function of the target boost jump (ΔP_{obj}).

13. A control method according to claim 12 and comprising the additional step of differentiating the control strategy in the second zone (B, C) as a function of the target boost jump (ΔP_{obj}) and also as a function of an actual boost jump (ΔP).

## Patentansprüche

1. Steuerverfahren für das Bypassventil (16) in einem von einem Turbolader (12) aufgeladenen Verbrennungsmotor (1); das Steuerverfahren beinhaltet folgende Schritte:
Bestimmen eines Soll-Ladedrucks (P_{obj});
Unterteilen des Betriebsbereichs des Bypassventils (16) gemäß dem Soll-Ladedrucksprung (ΔP_{obj}), d.h. dem Unterschied zwischen dem Soll-Ladedruck (P_{obj}) und dem Atmosphärendruck (Pₐₜₘ), in mindestens zwei unterschiedliche Betriebszonen: eine erste Betriebszone (A), in welcher der Soll-Ladedrucksprung (ΔP_{obj}) niedriger als ein Schwellenwert (ΔP_{obj1}) ist, und eine zweite Betriebszone (B, C), in welcher der Soll-Ladedrucksprung (ΔP_{obj}) höher als der Schwellenwert (ΔP_{obj1}) ist; und
Bestimmen einer Sollstellung (WG_{obj}) des Bypassventils (16) gemäß dem Soll-Ladedruck (P_{obj});
das Steuerverfahren **ist dadurch gekennzeichnet, dass** es den zusätzlichen Schritt beinhaltet, bei dem die Sollstellung (WG_{obj}) des Bypassventils (16) bestimmt wird, wenn das Bypassventil (16) in der ersten Betriebszone (A) ist, um einen Ist-Ladedruck (P) zu erhalten, der höher als der Soll-Ladedruck (P_{Obj}) und als der Atmosphärendruck (Pₐₜₘ₎ ist.

2. Steuerverfahren nach Anspruch 1, wobei der Schwellenwert (ΔP_{obj1}) nahe Null ist.

3. Steuerverfahren nach Anspruch 1 oder 2 und den zusätzlichen Schritt beinhaltend, bei dem die Sollstellung (WG_{obj}) des Bypassventils (16) im offenen Kreis durch ein erstes Steuerungsgesetz (CL2) bestimmt wird, wenn das Bypassventil (16) in der ersten Betriebszone (A) ist.

4. Steuerverfahren nach Anspruch 3 und den zusätzlichen Schritt beinhaltend, bei dem die Sollstellung (WG_{obj}) des Bypassventils (16) im offenen Kreis und geschlossenen Kreis durch ein zweites Steuerungsgesetz (CL1) bestimmt wird, wenn das Bypassventil (16) in der zweiten Betriebszone (B, C) ist.

5. Steuerverfahren nach Anspruch 4, wobei auf der Grenze zwischen der ersten Betriebszone (A) und der zweiten Betriebszone (B) die zwei Steuerungsgesetze (CL2, CL1) eine Verbindung ohne Unstetigkeit haben.

6. Steuerverfahren nach Anspruch 3, 4 oder 5 und folgende zusätzliche Schritte beinhaltend:
Bestimmen des virtuellen Verdichtungsverhältnisses (RPᵥᵢᵣₜ) gleich einem Verhältnis zwischen Sollsammlerdruck (P_{man-obj}) und dem Atmosphärendruck (Pₐₜₘ); und
Bestimmen der Sollstellung (WG_{obj}) des Bypassventils (16) in Abhängigkeit vom virtuellen Verdichtungsverhältnis (RPᵥᵢᵣₜ) und durch Anwendung des ersten Steuerungsgesetzes (CL2), das die Sollstellung (WG_{obj}) des Bypassventils (16) gemäß dem virtuellen Verdichtungsverhältnis (RPᵥᵢᵣₜ) liefert.

7. Steuerverfahren nach Anspruch 6, wobei das erste Steuerungsgesetz (CL2) die Sollstellung (WG_{obj}) des Bypassventils (16) in Abhängigkeit vom virtuellen Verdichtungsverhältnis (RPᵥᵢᵣₜ) und von einem reduzierten Massendurchsatz (M_{R}) liefert.

8. Steuerverfahren nach Anspruch 6 oder 7 und folgende zusätzliche Schritte beinhaltend:
Filtern des virtuellen Verdichtungsverhältnisses (RPᵥᵢᵣₜ) unter Verwendung eines ersten Tiefpassfilters (53), um die Änderungsgeschwindigkeit zu reduzieren; und Filtern der Sollstellung (WG_{obj}) des Bypassventils (16) durch ein zweites Tiefpassfilter (54), um die Änderungsgeschwindigkeit zu reduzieren.

9. Steuerverfahren nach Anspruch 8, wobei das zweite Tiefpassfilter (54) asymmetrisch ist und nur dann filtert, wenn die Sollstellung (WG_{obj}) des Bypassventils (16) sich ändert, um das Bypassventil (16) zu öffnen, und nicht filtert, wenn die Sollstellung (WG_{obj}) des Bypassventils (16) sich ändert, um das Bypassventil (16) zu schließen.

10. Steuerverfahren nach einem der Ansprüche 6 bis 9 und folgende zusätzliche Schritte beinhaltend:
Auswählen eines Sportmodus, der die Leistung begünstigt, oder eines Sparmodus, der eine Senkung des Verbrauchs begünstigt; und
Differenzieren des anzuwendenden ersten Steuerungsgesetzes (CL2) abhängig vom ausgewählten Modus.

11. Steuerverfahren nach Anspruch 10, wobei im ersten Steuerungsgesetz (CL2) der Sportmodus im Vergleich zum Sparmodus einen höheren effektiven Ladedruck (P) erfordert, während alle übrigen Parameter gleich bleiben.

12. Steuerverfahren nach einem der Ansprüche 1 bis 11 und den zusätzlichen Schritt beinhaltend, bei dem die Steuerungsstrategie in der zweiten Zone (B, C) in Abhängigkeit vom Soll-Ladesprung (ΔP_{obj}) differenziert wird.

13. Steuerverfahren nach Anspruch 12 und den zusätzlichen Schritt beinhaltend, bei dem die Steuerungsstrategie in der zweiten Zone (B, C) in Abhängigkeit vom Soll-Ladesprung (ΔP_{obj}) und auch in Abhängigkeit von einem Ist-Ladesprung (ΔP) differenziert wird.

## Revendications

1. Procédé de commande de la soupape de décharge (16) dans un moteur à combustion interne (1) turbocompressé par un turbocompresseur (12) ; le procédé de commande comprenant les étapes consistant à :
déterminer une pression de suralimentation cible (P_{obj}) ;
diviser la plage de fonctionnement de la soupape de décharge (16) en fonction du saut de suralimentation cible (ΔP_{obj}), ou, autrement dit, de la différence entre la pression de suralimentation cible (P_{obj}) et la pression atmosphérique (Pₐₜₘ), dans au moins deux zones de fonctionnement distinctes : une première zone (A) de fonctionnement dans laquelle le saut de suralimentation cible (ΔP_{obj}) est inférieur à un seuil (ΔP_{obj1}), et une deuxième zone (B, C) de fonctionnement, dans laquelle le saut de suralimentation cible (ΔP_{obj}) est supérieur au seuil (ΔP_{obj1}) ; et
déterminer une position cible (WG_{obj}) de la soupape de décharge (16) en fonction de la pression de suralimentation cible (P_{obj}) ;
le procédé de commande étant **caractérisé en ce qu'**il comprend l'étape additionnelle de détermination, lorsque la soupape de décharge (16) est dans la première zone (A) de fonctionnement, de la position cible (WG_{obj}) de la soupape de décharge (16), de façon à obtenir une pression de suralimentation effective (P) supérieure à la pression de suralimentation cible (P_{obj}) et à la pression atmosphérique (Pₐₜₘ).

2. Procédé de commande selon la revendication 1, dans lequel le seuil (ΔP_{obj1}) est proche de zéro.

3. Procédé de commande selon la revendication 1 ou 2, et comprenant l'étape additionnelle de détermination, lorsque la soupape de décharge (16) est dans la première zone (A) de fonctionnement, de la position cible (WG_{obj}) de boucle ouverte de la soupape de décharge (16) à l'aide d'une première loi de commande (CL2).

4. Procédé de commande selon la revendication 3, et comprenant l'étape additionnelle de détermination, lorsque la soupape de décharge (16) est dans la deuxième zone (B, C) de fonctionnement, de la position cible (WG_{obj}) de boucle ouverte et de boucle fermée de la soupape de décharge (16) à l'aide d'une deuxième loi de commande (CL1).

5. Procédé de commande selon la revendication 4, dans lequel, dans la limite entre la première zone (A) de fonctionnement et la deuxième zone (B) de fonctionnement, les deux lois de commande (CL2, CL1) ont une connexion sans discontinuité.

6. Procédé de commande selon la revendication 3, 4 ou 5, et comprenant les étapes additionnelles consistant à :
déterminer le taux de compression virtuel (RPᵥᵢᵣₜ) égal à un rapport entre une pression de collecteur cible (P_{man-obj}) et la pression atmosphérique (Pₐₜₘ) ; et
déterminer la position cible (WG_{obj}) de la soupape de décharge (16) en fonction du taux de compression virtuel (RPᵥᵢᵣₜ) et par l'utilisation de la première loi de commande (CL2), ce qui produit la position cible (WG_{obj}) de la soupape de décharge (16) en fonction du taux de compression virtuel (RPᵥᵢᵣₜ).

7. Procédé de commande selon la revendication 6, dans lequel la première loi de commande (CL2) produit la position cible (WG_{obj}) de la soupape de décharge (16) en fonction du taux de compression virtuel (RPᵥᵢᵣₜ) et d'une capacité de masse réduite (M_{R}).

8. Procédé de commande selon la revendication 6 ou 7, et comprenant les étapes additionnelles consistant à :
filtrer le taux de compression virtuel (RPᵥᵢᵣₜ) à l'aide d'un premier filtre passe-bas (53) de façon à réduire la vitesse de variation ; et
filtrer la position cible (WG_{obj}) de la soupape de décharge (16) à l'aide d'un deuxième filtre passe-bas (54) de façon à réduire la vitesse de variation.

9. Procédé de commande selon la revendication 8, dans lequel le deuxième filtre passe-bas (54) est asymétrique et n'effectue un filtrage que lorsque la position cible (WG_{obj}) de la soupape de décharge (16) change de façon à ouvrir la soupape de décharge (16), et n'effectue pas de filtrage lorsque la position cible (WG_{obj}) de la soupape de décharge (16) change de façon à fermer la soupape de décharge (16).

10. Procédé de commande selon l'une des revendications 6 à 9, et comprenant les étapes additionnelles consistant à :
sélectionner un mode sportif qui favorise les performances, ou un mode économique qui favorise la réduction de consommation ; et
différencier la première loi de commande (CL2) de façon à être utilisée en fonction du mode sélectionné.

11. Procédé de commande selon la revendication 10, dans lequel, dans la première loi de commande (CL2), le mode sportif nécessite une pression de suralimentation efficace plus élevée (P), tout en maintenant tous les autres paramètres identiques, par rapport au mode économique.

12. Procédé de commande selon l'une des revendications 1 à 11, et comprenant l'étape additionnelle de différenciation de la stratégie de commande dans la deuxième zone (B, C) en fonction du saut de suralimentation cible (ΔP_{obj}).

13. Procédé de commande selon la revendication 12, et comprenant l'étape additionnelle de différenciation de la stratégie de commande dans la deuxième zone (B, C) en fonction du saut de suralimentation cible (ΔP_{obj}), et, également, en fonction d'un saut de suralimentation effectif (ΔP).
